# EUROPÄISCHE PATENTANMELDUNG

(11) **EP 3 009 350 A1**
(43) Veröffentlichungstag der Anmeldung: **20.04.2016**
(21) Anmeldenummer: 14189450.1
(22) Anmeldetag: 17.10.2014
(51) Int. Cl.: B64D 11/06, B64C 1/18

(54) **Sitzbefestigungssystem, Sitz oder Sitzgruppe, Luftfahrzeugkabine und Verfahren zum Befestigen eines Sitzes oder einer Sitzgruppe**

(71) Anmelder: Airbus Defence and Space GmbH, 85521 Ottobrunn (DE)
(72) Erfinder: Toktas, Yavuz, 21337 Lüneburg (DE); Rollfink, Patrick, 22765 Hamburg (DE)
(74) Vertreter: Kastel, Stefan

(57) **Zusammenfassung**

Um das Gewicht zu reduzieren, die Montage eines Sitzes oder einer Sitzgruppe zu vereinfachen und die Flexibilität der Kabine zu steigern, schafft die Erfindung ein Sitzbefestigungssystem (10) für einen Sitz oder eine Sitzgruppe (12) eines Luftfahrzeugs mit wenigstens einer Montageplatte (14) zum Anbinden des Sitzes oder der Sitzgruppe (12) an eine Luftfahrzeugstruktur des Luftfahrzeugs und wenigstens ein Befestigungsmodul (16) zum Befestigen des Sitzes oder der Sitzgruppe (12) an der Montageplatte (14).

## Beschreibung

Die vorliegende Erfindung betrifft ein Sitzbefestigungssystem für einen Sitz oder eine Sitzgruppe eines Luftfahrzeugs, insbesondere eines Flugzeugs. Ferner betrifft die Erfindung einen Sitz oder eine Sitzgruppe für ein Luftfahrzeug mit wenigstens einem derartigen Sitzbefestigungssystems. Zudem betrifft die Erfindung eine Luftfahrzeugkabine, insbesondere eine Flugzeugkabine, eines Luftfahrzeugs. Schließlich betrifft die Erfindung ein Verfahren zum Befestigen eines Sitzes oder einer Sitzgruppe eines Luftfahrzeuges, insbesondere eines Flugzeugs, an einer Flugzeugstruktur mittels eines derartigen Sitzbefestigungssystems.

Sitze oder Sitzgruppen, die auch als Sitzbänke bezeichnet werden, eines Luftfahrzeugs, insbesondere eines Flugzeugs, werden in die Flugzeugkabine mittels Sitzschienen befestigt, die in den Boden der Flugzeugkabine integriert sind. Die Sitzschienen sind mit einer Lochrasterkrone versehen, deren Lochraster äquidistante Bohrungen entlang der Krone umfasst. Über das Lochraster erfolgt die Positionierung der Sitze oder Sitzgruppen innerhalb der Flugzeugkabine. Zur Befestigung der Sitze an den Sitzschienen werden zunächst an den Füßen der Sitze oder Sitzgruppen Befestigungselemente befestigt. Die Befestigungselemente sind eine Fittingkonstruktion, die in die Lochrasterkrone eingesetzt und in dieser mittels eines an dem Befestigungselement angeordneten Verriegelungsmechanismus befestigt werden.

Die bisher bekannten Sitzbefestigungssysteme, Sitze oder Sitzgruppen, Luftfahrzeugkabinen und Verfahren zum Befestigen eines Sitzes oder einer Sitzgruppe haben den Nachteil, dass lediglich ein geringer Bereich der Sitzschiene für die Befestigung benötigt wird, so dass die nicht benötigten Stellen der Sitzschienen den Großteil ausmachen. Dies wiederum verursacht Gewicht und dies und führt zu einem erhöhten Kerosinverbrauch. Infolge der Lochrasterkrone verkanten sich die Befestigungselemente in der Schiene, was zu Komplikationen und einem zeitintensiven Einbau führt. Ferner ist die Flexibilität aufgrund der Schienen in der Flugzeugkabine eingeschränkt. Zudem sind für die nicht benötigten Stellen zusätzliche Abdeckungen erforderlich, um die Sitzschienen gegenüber Umwelteinflüssen, wie beispielsweise Flüssigkeiten, zu schützen.

Der Erfindung liegt die Aufgabe zugrunde, ein Sitzbefestigungssystem, einen Sitz oder eine Sitzgruppe mit einem derartigen Sitzbefestigungssystem, eine Luftfahrzeugkabine, sowie ein Verfahren zum Befestigen eines Sitzes oder einer Sitzgruppe mittels eines derartigen Sitzbefestigungssystems zu schaffen, mittels denen das Gewicht reduziert, die Montage eines Sitzes oder einer Sitzgruppe vereinfacht und die Flexibilität der Kabine gesteigert werden kann.

Diese Aufgabe wird durch die Gegenstände der unabhängigen Ansprüche gelöst.

Vorteilhafte Ausgestaltungen sind Gegenstand der Unteransprüche.

Die Erfindung schafft gemäß einem ersten Aspekt davon ein Sitzbefestigungssystem für einen Sitz oder eine Sitzgruppe eines Luftfahrzeuges, insbesondere eines Flugzeugs, mit wenigstens einer Montageplatte zum Anbinden des Sitzes oder der Sitzgruppe an eine Luftfahrzeugstruktur, insbesondere einer Luftfahrzeugkabine, des Luftfahrzeuges und wenigstens ein Befestigungsmodul zum Befestigen des Sitzes oder der Sitzgruppe an der Montageplatte. Mittels des erfindungsgemäßen Sitzbefestigungssystems können neue Materialien und Konstruktionsmethoden verwendet werden, was zu einer Gewichtreduzierung führt. Zudem ist es möglich einzelnen defekte Montageplatten auszutauschen, was zu einer verbesserten Wartungsfreundlichkeit führt. Zudem ermöglicht das erfindungsgemäße Sitzbefestigungssystem eine einfache und schnelle Montage eines Sitzes oder einer Sitzgruppe. Des Weiteren ist das erfindungsgemäße Sitzbefestigungssystem wartungsfreundlich und ermöglicht eine klare Abgrenzung der Lastpfade.
Es ist bevorzugt, dass die wenigstens eine Montageplatte als Fußbodenplatte der Luftfahrzeugstruktur, insbesondere der Luftfahrzeugkabine, ausgebildet ist. Folglich kann das erfindungsgemäße Sitzbefestigungssystem in den Boden der Luftfahrzeugkabine integriert sein. Dadurch ist eine Optimierung der Fußbodenstruktur der Luftfahrzeugkabine und die Verwendung innovativer Materialien möglich.

Es ist bevorzugt, dass die Montageplatte wenigstens eine Anschlussstelle zum Befestigen des Befestigungsmoduls aufweist. Über die Anschlussstelle erfolgt eine einfache und schnelle Montage des Befestigungsmoduls. Die Anschlussstelle kann als ein Loch oder eine Sacklochbohrung mit einem Gewinde zum Befestigen des Befestigungsmoduls ausgebildet sein.

Es ist bevorzugt, dass die Montageplatte mehrere Anschlussstellen zum Befestigen des Befestigungsmoduls umfasst, wobei die Anschlussstellen eine Lochreihe bilden.

Weiterhin vorteilhaft umfasst die Montageplatte mehrere Anschlussstellen zum Befestigen des Befestigungsmoduls, wobei die Anschlussstellen mehrere parallele Lochreihen bilden.

Es ist bevorzugt, dass das Sitzbefestigungssystem mehrere Montageplatten aufweist, wobei die Montageplatten mehrere Anschlussstellen zum Befestigen des Befestigungsmoduls umfasst, wobei die Anschlussstellen mehrere parallele Lochreihen bilden.

Die nicht verwendeten Anschlussstellen können mittels genormter Deckel abgedeckt werden.

Es ist bevorzugt, dass die wenigstens eine Anschlussstelle ein mit der Montageplatte verbundenes Anschlussstück umfasst.
Vorteilhaft umfasst jede der Anschlussstellen ein mit der Montageplatte verbundenes Anschlussstück.

Es ist bevorzugt, dass das Anschlussstück eine Aufnahmeöffnung und ein Gewinde aufweist. Über das Gewinde kann das Befestigungsmodul lösbar mit der Montageplatte verbunden werden. Vorliegend wird das Anschlussstück auch als Insert bezeichnet.

In einer vorteilhaften Ausgestaltung dient die Aufnahmeöffnung zum Einsetzen eines Zentrierbolzens, der als formschlüssige Schnittstelle zwischen dem Sitz oder der Sitzgruppe und der Montageplatte dient.

In einer vorteilhaften Ausgestaltung weist das Befestigungsmodul wenigstens ein Sitzbefestigungselement zum Befestigen des Sitzes und wenigstens ein Befestigungselement zum Befestigen des Sitzbefestigungselementes an der Montageplatte auf.

Es ist bevorzugt, dass das Sitzbefestigungselement als eine Befestigungsschiene zum Befestigen des Sitzes oder der Sitzgruppe an der Montageplatte ausgebildet ist. Vorteilhaft wird die Befestigungsschiene mittels zweier Befestigungselemente an einer oder mehreren Montageplatten befestigt, indem bevorzugt zwei Befestigungselemente in jeweils eine Anschlussstelle, insbesondere in ein Gewinde des Anschlussstücks, eingeschraubt werden.

Weiterhin vorteilhaft weist die Befestigungsschiene eine Durchgangsöffnung zum Einsetzen des wenigstens einen Befestigungselementes auf. Über die Durchgangsöffnung kann das Befestigungselement mit der Anschlussstelle, insbesondere dem Gewinde des Anschlussstücks, verbunden werden.
Es ist bevorzugt, dass das Sitzbefestigungselement wenigstens einen Befestigungsabschnitt zum Befestigen wenigstens eines Sitzfußes des Sitzes oder der Sitzgruppe aufweist.

Vorteilhaft weist das Sitzbefestigungselement jeweils endseitig einen Befestigungsabschnitt zum Befestigen eines Fußes des Sitzes oder der Sitzgruppe auf.

Der Sitz oder die Sitzgruppe kann mit dem Befestigungsabschnitt über eine Bolzenverbindung verbunden sein.

Vorteilhaft ist der Befestigungsabschnitt als ein von der Befestigungsschiene abragender Flanschabschnitt mit einer Durchgangsöffnung zum Hindurchführen eines Bolzens ausgebildet. Bevorzugt ist die Durchgangsöffnung als Schlitz ausgebildet.

Es ist bevorzugt, dass das Sitzbefestigungselement eine Lochreihe aufweist, die im befestigten Zustand des Sitzbefestigungselementes der Montageplatte zugeordnet ist. Die Lochreihe kann zur Aufnahme eines aus dem Anschlussstück herausragenden Abschnitts eines Zentrierelements dienen.

Es ist bevorzugt, dass das Befestigungselement eine Schraube und eine Unterlegscheibe umfasst. Vorteilhaft ist die Schraube als eine Dehnschraube ausgebildet.

Es ist bevorzugt, dass das Befestigungsmodul wenigstens ein Zentrierelement aufweist. Über das Zentrierelement erfolgt eine formschlüssige Verbindung des Sitzes oder der Sitzgruppe mit der wenigstens einen Montageplatte. Die Zentrierelemente können in die Aufnahmeöffnung der Anschlussstücke eingesetzt werden.

Vorteilhaft ragt ein Abschnitt aus der Aufnahmeöffnung des Anschlussstücks heraus, der von der Lochreihe der Befestigungsschiene aufnehmbar ist.
Vorteilhaft ist das Zentrierelement als Zentrierbolzen ausgebildet. Mittels des Zentrierelements kann der Sitz oder die Sitzgruppe ausgerichtet werden und zudem leitet es die Kräfte in der horizontalen Ebene, insbesondere in X- und Y-Richtung, ab.

Es ist bevorzugt, dass die Montageplatte aus faserverstärktem Kunststoff hergestellt ist. Durch die Verwendung von faserverstärktem Kunststoff weist das erfindungsgemäße Sitzbefestigungssystem ein geringes Gewicht auf.

Es ist bevorzugt, dass das wenigstens eine Anschlussstück aus Metall hergestellt ist. Vorzugsweise ist das Anschlussstück aus Titan hergestellt. Die Anschlussstücke sind in die Platten mittels der sogenannten Insert-Technologie eingebracht. Dabei werden die Anschlussstücke in die Werkzeugform eingelegt und mit dem faserverstärkten Kunststoff umhüllt, so dass eine formschlüssige Verbindung zwischen dem faserverstärktem Kunststoff und den Anschlussstücken entsteht. Anschlussstücke aus Metall weisen im Vergleich zu einem Kunststoffteil eine geringere Kriechneigung auf, so dass über einen langen Zeitraum eine gleichbleibend hohe Befestigung des Befestigungsmoduls, insbesondere der Befestigungselemente in den Gewinden der Anschlussstücke, gewährleistet wird.

Gemäß einem weiteren Aspekt schafft die Erfindung einen Sitz oder eine Sitzgruppe für ein Luftfahrzeug, insbesondere ein Flugzeug, mit wenigstens einem Sitzbefestigungssystem nach einer oder mehrerer der voranstehenden beschriebenen Ausgestaltungen.

Gemäß einem weiteren Aspekt schafft die Erfindung eine Luftfahrzeugkabine eines Luftfahrzeuges, insbesondere eines Flugzeugs, mit wenigstens einer Montageplatte eines Sitzbefestigungssystems nach einer oder mehrerer der voranstehend beschriebenen Ausgestaltungen.

Gemäß einem weiteren Aspekt schafft die Erfindung ein Verfahren zum Befestigen eines Sitzes oder einer Sitzgruppe eines Luftfahrzeuges an einer Flugzeugstruktur, insbesondere einer Luftfahrzeugkabine, mittels eines Sitzbefestigungssystems, das folgende Verfahrensschritte aufweist. Zuerst wird wenigstens eine Montageplatte mit wenigstens einem damit verbundenem Anschlussstück, das eine Aufnahmeöffnung und ein Gewinde aufweist, und ein Befestigungsmodul, das wenigstens ein Zentrierelement, wenigstens ein Befestigungselement und wenigstens ein Sitzbefestigungselement mit einem Schlitz zum Einsetzen des Befestigungselementes aufweist, bereitgestellt. Danach wird das Zentrierelement in die Aufnahmeöffnung des Anschlussstücks eingesetzt. Anschließend wird das Sitzbefestigungselement derart positioniert, dass das Befestigungselement über den Schlitz in das Gewinde des Anschlussstücks einschraubbar ist. Anschließend wird das Befestigungselement in den Schlitz eingesetzt und in das Gewinde eingeschraubt. Schließlich wird der Sitz oder die Sitzgruppe an dem Sitzbefestigungselement befestigt. Bevorzugt werden pro Sitzbefestigungselement zwei Befestigungselemente verwendet, wobei jedes der Befestigungselemente mit jeweils einem mit einem Zentrierelement versehenen Anschlussstück verbunden werden.

Es ist bevorzugt, dass das Sitzbefestigungselement einen Befestigungsabschnitt zum Befestigen des Sitzes oder der Sitzgruppe aufweist, wobei der Sitz oder die Sitzgruppe über eine Bolzenverbindung mit dem Befestigungsabschnitt verbunden wird. Vorteilhaft weist das Sitzbefestigungselement zwei Befestigungsabschnitte auf, wobei der vordere Fuß des Sitzes oder der Sitzgruppe an einem ersten Befestigungsabschnitt über eine Bolzenverbindung und der hintere Fuß des Sitzes oder der Sitzgruppe an einem zweiten Befestigungsabschnitt über eine Bolzenverbindung verbunden werden.

Nachfolgend wird die Erfindung anhand der beigefügten Zeichnungen näher erläutert. Hierbei zeigen schematisch:
- Fig. 1: eine Sitzgruppe eines Luftfahrzeugs, insbesondere eines Flugzeugs, mit einem erfindungsgemäßen Sitzbefestigungssystem;
- Fig. 2: eine vergrößerte perspektivische Darstellung des erfindungsgemäßen Sitzbefestigungssystems von Fig. 1;
- Fig. 3: eine vergrößerter Ausschnitt eines Schnitts durch eine Montageplatte im Bereich eines Anschlussstücks von Fig. 1;
- Fig. 4: eine vergrößerte Darstellung einer Befestigungsschiene des erfindungsgemäßen Sitzbefestigungssystems;
- Fig. 5: eine vergrößerte Unteransicht der Befestigungsschiene von Fig. 4;
- Fig. 6: eine vergrößerte Darstellung eines Längsschnitts durch ein Zentrierelement des erfindungsgemäßen Sitzbefestigungssystems;
- Fig. 7: eine perspektivische Darstellung von Montageplatten mit Anschlussstellen des erfindungsgemäßen Sitzbefestigungssystems sowie teilweise in die Anschlussstücke eingebrachte Zentrierbolzen;
- Fig. 8: eine perspektivische Ansicht von Befestigungsschienen, die auf den Montageplatten im Bereich der Zentrierbolzen angeordnet sind;
- Fig. 9: eine perspektivische Ansicht der Befestigungsschienen und der Montageplatten, wobei die Montageplatten mittels Schrauben mit den Anschlussstücken der Montageplatten verbunden sind; und
- Fig. 10: eine perspektivische Darstellung der Befestigung der Füße der Sitzgruppe an der Befestigungsschiene.

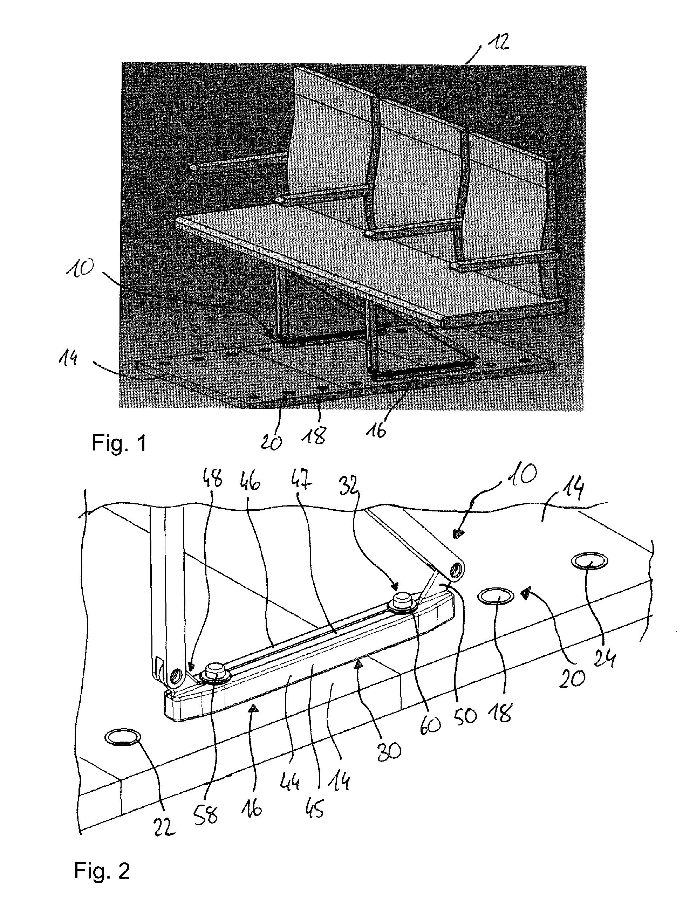

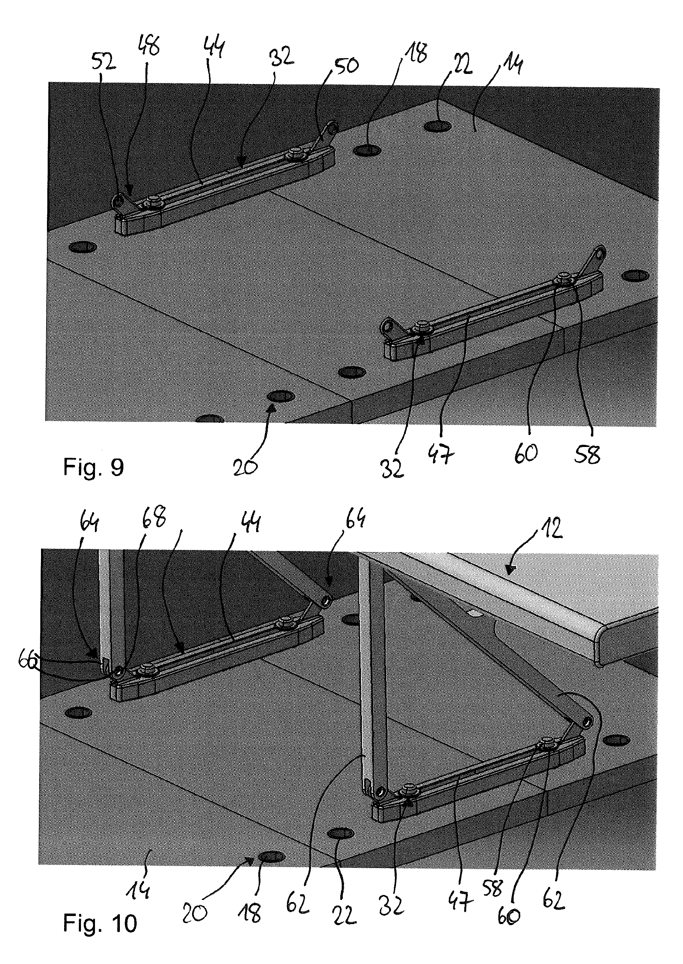

In den Fig. 1, 2 und 10 ist ein Sitzbefestigungssystem 10 zur Befestigung eines Sitzes oder einer Sitzgruppe 12 eines Luftfahrzeugs, insbesondere eines Flugzeugs, an einer Flugzeugstruktur, insbesondere an einer Luftfahrzeugkabine, dargestellt.

Das Sitzbefestigungssystem 10 weist mehrere rechteckförmige Montageplatten 14, die sich an ihren Längsseiten kontaktieren, und Befestigungsmodule 16, insbesondere zwei Befestigungsmodule 16 pro Sitz oder Sitzgruppe 12, zum Befestigen der Sitzgruppe 12 an der Montageplatte 14 auf.

Wie insbesondere in den Fig. 1, 2 und 7 bis 10 ersichtlich ist, weist jede der Montagplatten 14 mehrere Anschlussstellen 18 zum Befestigen der Befestigungsmodule 16 auf. Die Anschlussstellen 18 bilden auf jeder Montageplatte zwei parallele Lochreihen 20, wobei jede Lochreihe 20 aus drei Anschlussstellen 18 gebildet ist. Die Montageplatten 14 sind aus faserverstärktem Kunststoff hergestellt.

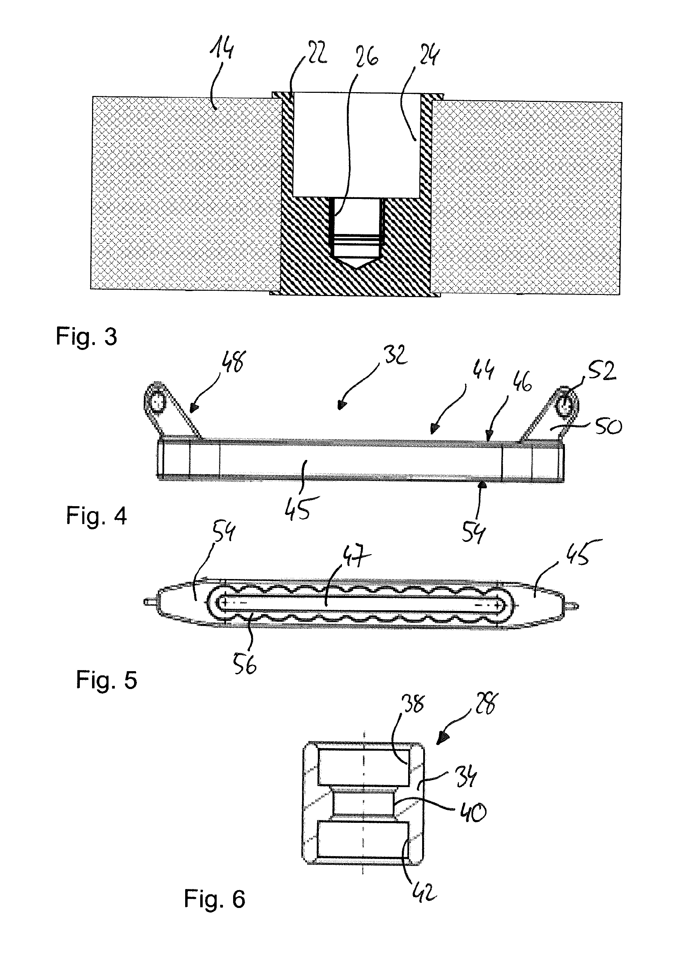

Jede der Anschlussstellen 18 ist aus einem Anschlussstück 22, das auch als Insert oder Einsatz bezeichnet wird, gebildet, wie insbesondere in Fig. 3 ersichtlich ist. Vorliegend ist das Anschlussstück 22 aus Metall, insbesondere aus Titan, hergestellt. Die Anschlussstücke 22 sind formschlüssig mit der Montageplatte 14 mittels der sogenannten Insert-Technologie verbunden. Das Anschlussstück weist eine Aufnahmeöffnung 24 und ein Gewinde 26 zum Einschrauben eines Befestigungselements, insbesondere einer Schraube, auf.

Das Befestigungsmodul 16 weist zwei Zentrierelemente 28, ein Sitzbefestigungselement 30 und zwei Befestigungselemente 32 auf.

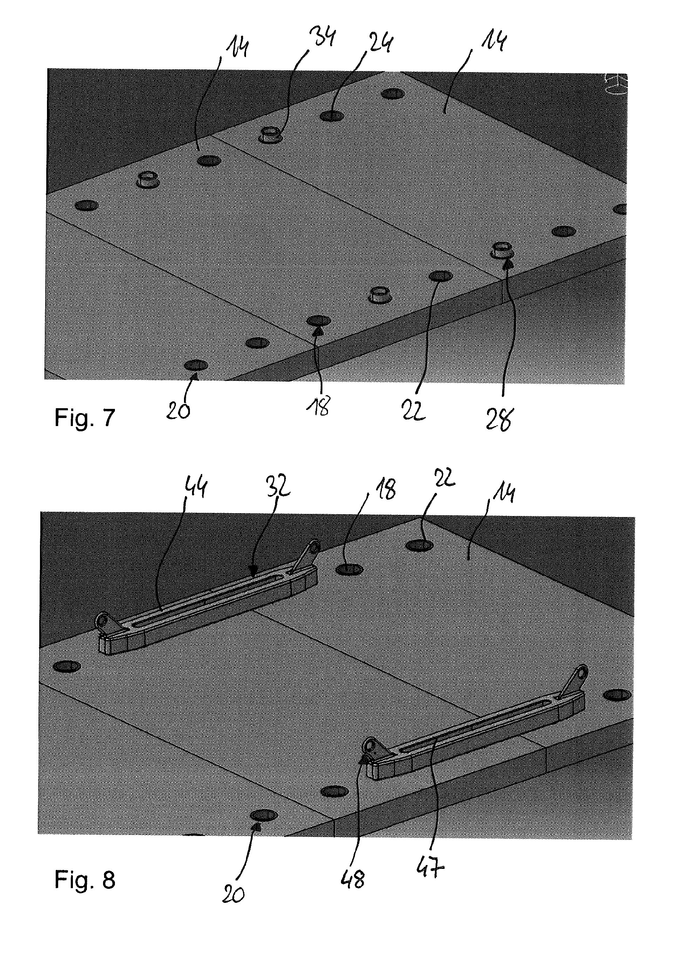

Wie insbesondere in Fig. 6 ersichtlich ist, ist das Zentrierelement 30 als Zentrierbolzen 34 ausgebildet. Der Zentrierbolzen 34 ist in die Aufnahmeöffnung 24 des Anschlussstücks 22 einsetzbar, wobei im eingesetzten Zustand ein Abschnitt des Zentrierbolzens 34 aus der Aufnahmeöffnung 24 herausragt, wie in Fig. 8 ersichtlich ist. Der Zentrierbolzen 34 weist eine Durchgangsöffnung 36 zum Hindurchführen des Befestigungselements 32 auf. Die Durchgangsöffnung 36 ist aus drei Abschnitten gebildet, wobei ein erster und ein zweiter Abschnitt 38, 40 den gleichen Durchmesser aufweisen und über einen dritten Abschnitt 42, der einen kleineren Durchmesser als die anderen beiden Abschnitte 38, 40 aufweist, miteinander verbunden sind.

Das Sitzbefestigungselement 30 ist als Befestigungsschiene 44, die auch als Stange bezeichnet wird, ausgebildet. Die Befestigungsschiene 44 weist einen länglichen Grundkörper 45 auf. Der Grundkörper 45 umfasst auf einer Oberseite 46 einen sich in Längsrichtung erstreckenden Schlitz 47 zum Hindurchführen der Befestigungselemente 32 auf. Ferner weist die Befestigungsschiene 44 jeweils endseitig einen Befestigungsabschnitt 48 auf. Der Befestigungsabschnitt 48 ist als von der Befestigungsschiene 44 abragende Platte 50 mit einer endseitig eingebrachten Öffnung 52 zum Hindurchführen eines nicht dargestellten Bolzens ausgebildet, wie in Fig. 4 ersichtlich ist.

Wie in Fig. 5 ersichtlich ist, weist der Grundkörper 45 auf einer Unterseite 54 eine Lochreihe 56 auf, die zur Aufnahme des aus der Aufnahmeöffnung 24 herausragenden Abschnitts des Zentrierbolzens 34 dient.

Im Folgenden wird ein Verfahren zum Befestigen der Sitzgruppe 12 mittels des Sitzbefestigungssystems 10 anhand der Fig. 7 bis 10 erläutert.

Wie in Fig. 7 ersichtlich ist, werden zunächst die Montageplatten 14 bereitgestellt. Die Montageplatten 14 können als Bodenplatten der Luftfahrzeugkabine ausgebildet sein und in diese eingebaut werden. Anschließend werden die Zentrierbolzen 34 in die Aufnahmeöffnungen 24 der Anschlussstücke 22 eingesetzt. Dabei werden pro Befestigungsschiene 44 zwei Zentrierbolzen 34 verwendet, wobei zur besseren Lastverteilung die beiden Zentrierbolzen 34 durch ein nicht bestücktes Anschlussstück 22 voneinander beabstandet sind. Anschließend wird pro Lochreihe 20 jeweils eine Befestigungsschiene 44 auf die herausragenden Abschnitte der Zentrierbolzen 34 aufgesetzt. Danach werden die Dehnschrauben 58 mit Unterlegscheiben 60 versehen und über den Schlitz 47 in die Zentrierbolzen 34 eingeführt und in das Gewinde 26 eingeschraubt. Schließlich werden die Füße 62 der Sitzgruppe 12 mit den Befestigungsabschnitten 48 der Befestigungsschiene 44 über eine nicht dargestellte Bolzenverbindung verbunden. Hierzu weisen die Füße 62 endseitig einen Aufnahmeabschnitt 64 zur Aufnahme eines Befestigungsabschnitts 48 auf. Der Aufnahmeabschnitt 64 ist aus zwei voneinander beabstandeten Schenkeln 66 gebildet, zwischen denen der Befestigungsabschnitt 48 beziehungsweise die Platte 50 aufgenommen wird. Jeder der Befestigungsschenkel 66 weist eine Durchgangsöffnung 68 auf. Die Befestigungsschenkel 66 werden derart positioniert, dass die Durchgangsöffnungen 68 koaxial mit der Öffnung 52 ausgerichtet sind, so dass ein nicht dargestellter Bolzen zur Befestigung hindurchgeführt werden kann.

### Bezugszeichenliste

- 10: Sitzbefestigungssystem
- 12: Sitzgruppe
- 14: Montageplatte
- 16: Befestigungsmodul
- 18: Anschlussstelle
- 20: Lochreihe
- 22: Anschlussstück
- 24: Aufnahmeöffnung
- 26: Gewinde
- 28: Zentrierelement
- 30: Sitzbefestigungselement
- 32: Befestigungselement
- 34: Zentrierbolzen
- 36: Durchgangsöffnung
- 38: erster Abschnitt
- 40: zweiter Abschnitt
- 42: dritter Abschnitt
- 44: Befestigungsschiene
- 45: Grundkörper
- 46: Oberseite
- 47: Schlitz
- 48: Befestigungsabschnitt
- 50: Platte
- 52: Öffnung
- 54: Unterseite
- 56: Lochreihe
- 58: Dehnschraube
- 60: Unterlegscheibe
- 62: Fuß
- 64: Aufnahmeabschnitt
- 66: Befestigungsschenkel
- 68: Durchgangsöffnung

## Patentansprüche

1. Sitzbefestigungssystem (10) für einen Sitz oder eine Sitzgruppe (12) eines Luftfahrzeuges mit wenigstens einer Montageplatte (14) zum Anbinden des Sitzes oder der Sitzgruppe (12) an eine Luftfahrzeugstruktur des Luftfahrzeuges und wenigstens ein Befestigungsmodul (16) zum Befestigen des Sitzes oder der Sitzgruppe (12) an der Montageplatte (14).

2. Sitzbefestigungssystem (10) nach Anspruch 1,
**gekennzeichnet durch** wenigstens eines der folgenden Merkmale:
2.1 dass die Montageplatte (14) wenigstens eine Anschlussstelle (18) zum Befestigen des Befestigungsmoduls (16) aufweist;
2.2 dass die Montageplatte (14) mehrere Anschlussstellen (18) zum Befestigen des Befestigungsmoduls (16) umfasst, wobei die Anschlussstellen (18) eine Lochreihe (20) bilden;
2.3 dass die Montageplatte (14) mehrere Anschlussstellen (18) zum Befestigen des Befestigungsmoduls (16) umfasst, wobei die Anschlussstellen (18) mehrere parallele Lochreihen (20) bilden;
2.4 dass das Sitzbefestigungssystem (10) mehrere Montageplatten (14) aufweist, wobei die Montageplatten (14) mehrere Anschlussstellen (18) zum Befestigen des Befestigungsmoduls (16) umfasst, wobei die Anschlussstellen (18) mehrere parallele Lochreihen (20) bilden.

3. Sitzbefestigungssystem (10) nach Anspruch 2,
**gekennzeichnet durch** wenigstens eines der folgenden Merkmale:
3.1 dass die wenigstens eine Anschlussstelle (18) ein mit der Montageplatte (14) verbundenes Anschlussstück (22) umfasst;
3.2 dass jede der Anschlussstellen (18) ein mit der Montageplatte (14) verbundenes Anschlussstück (22) umfasst;
3.2 dass das Anschlussstück (22) eine Aufnahmeöffnung (24) und ein Gewinde (26) aufweist.

4. Sitzbefestigungssystem (10) nach einem der voranstehenden Ansprüche,
**dadurch gekennzeichnet, dass**
das Befestigungsmodul (16) wenigstens ein Sitzbefestigungselement (30) zum Befestigen des Sitzes und wenigstens ein Befestigungselement (32) zum Befestigen des Sitzbefestigungselementes (30) an der Montageplatte (14) aufweist.

5. Sitzbefestigungssystem (10) nach Anspruch 4,
**dadurch gekennzeichnet, dass**
das Sitzbefestigungselement (30) als eine Befestigungsschiene (44) zum Befestigen des Sitzes oder der Sitzgruppe (12) an der Montageplatte (14) ausgebildet ist, wobei die Befestigungsschiene (44) eine Durchgangsöffnung (47) zum Einsetzen des wenigstens einen Befestigungselementes (32) aufweist.

6. Sitzbefestigungssystem (10) nach Anspruch 4 oder 5,
**dadurch gekennzeichnet, dass**
das Sitzbefestigungselement (30) wenigstens einen Befestigungsabschnitt (48) zum Befestigen wenigstens eines Fußes des Sitzes oder der Sitzgruppe (12) aufweist.

7. Sitzbefestigungssystem (10) nach einem der Ansprüche 4 bis 6,
**dadurch gekennzeichnet, dass**
das Sitzbefestigungselement (30) eine Lochreihe (20) aufweist, die im befestigten Zustand des Sitzbefestigungselementes (30) der Montageplatte (14) zugeordnet ist.

8. Sitzbefestigungssystem (10) nach einem der Ansprüche 4 bis 7,
**dadurch gekennzeichnet, dass**
das Befestigungselement (32) eine Schraube (58) und eine Unterlegscheibe (60) umfasst.

9. Sitzbefestigungssystem (10) nach einem der voranstehenden Ansprüche,
**dadurch gekennzeichnet, dass**
das Befestigungsmodul (16) wenigstens ein Zentrierelement (28) aufweist.

10. Sitzbefestigungssystem (10) nach einem der voranstehenden Ansprüche,
**dadurch gekennzeichnet, dass**
die wenigstens eine Montageplatte (14) aus faserverstärktem Kunststoff hergestellt ist.

11. Sitzbefestigungssystem (10) nach einem der Ansprüche 3 bis 10,
**dadurch gekennzeichnet, dass**
das wenigstens eine Anschlussstück (22) aus Metall hergestellt ist.

12. Sitz oder Sitzgruppe (12) für ein Luftfahrzeug mit wenigstens einem Sitzbefestigungssystem (10) nach einem der Ansprüche 1 bis 11.

13. Luftfahrzeugkabine eines Luftfahrzeuges mit wenigstens einer Montageplatte (14) eines Sitzbefestigungssystems (10) nach einem der Ansprüche 1 bis 11.

14. Verfahren zum Befestigen eines Sitzes oder einer Sitzgruppe (12) eines Luftfahrzeuges an einer Flugzeugstruktur mittels eines Sitzbefestigungssystems (10), **gekennzeichnet durch** folgende Verfahrensschritte:
a. Bereitstellen wenigstens einer Montageplatte (14) mit wenigstens einem damit verbundenem Anschlussstück (22), das eine Aufnahmeöffnung (24) und ein Gewinde (26) aufweist, und einem Befestigungsmodul (16), wobei das Befestigungsmodul (16) wenigstens ein Zentrierelement (28), wenigstens ein Befestigungselement (32) und wenigstens ein Sitzbefestigungselement (30) mit einer Durchgangsöffnung (47) zum Einsetzen des Befestigungselementes (32) aufweist;
b. Einsetzen des Zentrierelementes (28) in die Aufnahmeöffnung (24) des Anschlussstücks (22);
c. Positionieren des Sitzbefestigungselementes (30) derart, dass das Befestigungselement (32) über den Schlitz in das Gewinde (26) des Anschlussstücks (22) einschraubbar ist;
d. Einsetzen des Befestigungselementes (32) in den Schlitz und Einschrauben des Befestigungselementes (32) in das Gewinde (26);
e. Befestigen des Sitzes oder der Sitzgruppe (12) an dem Sitzbefestigungselement (30).

15. Verfahren nach Anspruch 14,
**dadurch gekennzeichnet, dass**
das Sitzbefestigungselement (30) einen Befestigungsabschnitt (48) zum Befestigen des Sitzes oder der Sitzgruppe (12) aufweist, wobei der Sitz oder die Sitzgruppe (12) über eine Bolzenverbindung mit dem Befestigungsabschnitt (48) verbunden wird.
